Europäisches Patentamt

European Patent Office

Office européen des brevets

(19)

(11) EP 0 894 077 B1

(12) FASCICULE DE BREVET EUROPEEN

(45) Date de publication et mention
de la délivrance du brevet:
**17.07.2002 Bulletin 2002/29**

(21) Numéro de dépôt: **98903096.0**

(22) Date de dépôt: **20.01.1998**

(51) Int Cl.⁷: $C02F\ 1/46$, $C02F\ 1/20$

(86) Numéro de dépôt international:
**PCT/FR98/00102**

(87) Numéro de publication internationale:
**WO 98/31635 (23.07.1998 Gazette 1998/29)**

(54) **PROCEDE ELECTROCATALYTIQUE DE DESOXYGENATION DE L'EAU DE MER**

ELEKTROKATALYTISCHE METHODE ZUR SAUERSTOFFENTFERNUNG AUS MEERWASSER

ELECTROCATALYTIC METHOD FOR THE DEOXYGENATING OF SEA WATER

(84) Etats contractants désignés:
**DE DK FR GB IT NL SE**

(30) Priorité: **21.01.1997 FR 9700564**

(43) Date de publication de la demande:
**03.02.1999 Bulletin 1999/05**

(73) Titulaire: **Elf Exploration Production
92400 Courbevoie (FR)**

(72) Inventeurs:
- **BARBIER, Jacques
  F-86360 Montanise (FR)**
- **BOUSQUET, Jacques
  F-69540 Irigny (FR)**
- **VALENTIN, Gérard
  F-54220 Malzeville (FR)**
- **STORCK, Alain
  F-54000 Nancy (FR)**
- **LINTZ, Hans-Günther
  D-76139 Karlsruhe (DE)**
- **KINZEL, Peter
  D-67434 Neustadt (DE)**

(74) Mandataire: **Cabinet Hirsch
34, Rue de Bassano
75008 Paris (FR)**

(56) Documents cités:
EP-A- 0 276 789          EP-A- 0 311 575
WO-A-93/24412          US-A- 3 966 571
US-A- 3 969 201          US-A- 4 292 197
US-A- 4 527 626

**Description**

L'invention concerne un procédé électrocatalytique de désoxygénation d'eaux de provenances diverses et tout particulièrement de l'eau de mer.

Le maintien en pression des gisements d'huile, notamment gisements marins, ou/et la récupération améliorée de celle-ci conduisent les producteurs de pétrole en mer à injecter de l'eau de mer dans le gisement en cours d'exploitation. Un tel processus impose que cette eau soit traitée avant injection dans le gisement. C'est la raison pour laquelle on procède généralement tout d'abord à un traitement bactéricide, par chloration par exemple, puis à une filtration en plusieurs étapes de façon à éliminer toute matière en suspension, qui pourrait entraîner d'éventuels colmatages dans le dispositif d'injection de cette eau de mer ainsi que dans le gisement et dans les puits de production. Enfin, il faut procéder à une désoxygénation poussée de l'eau de mer après filtration, sans quoi des risques de corrosion très importants sont à craindre pour l'installation avec les conséquences financières que l'on peut imaginer.

Pour mettre en oeuvre la désoxygénation précitée de l'eau de mer, les techniques utilisées conventionnellement sont le strippage par des gaz exempts d'oxygène ou la mise sous pression réduite. Ces deux techniques sont aujourd'hui prouvées et performantes car elles permettent d'atteindre sans difficulté une teneur résiduelle en oxygène dans l'eau de mer traitée, qui est de l'ordre de 50 ppb(1 ppb = $1 \times 10^{-7}$ % en poids).

Ces techniques ont également quelques désavantages intrinsèques. On sait, par exemple, que le strippage par les gaz acidifie toujours un peu l'eau en raison du $CO_2$ toujours présent. De plus, les traces d'huile entraînées dans le gaz de strippage, en dépit des techniques de dévésiculation les plus performantes, peuvent poser des problèmes de colmatage dans l'ensemble des installations de production. La mise en service de tours de dégazage sous vide ne présente pas ce genre de difficultés, mais a, en revanche, l'inconvénient de mettre en oeuvre des machines tournantes dont la maintenance doit être assurée et dont le fonctionnement exige la mise en place de structures particulièrement onéreuses en mer.

Une technique, présentant de nombreux avantages par rapport aux techniques mentionnées ci-dessus, a été décrite par la demanderesse dans la citation WO-A-9524360. Il s'agit là d'éliminer l'oxygène contenu dans l'eau de mer en réalisant une hydrogénation catalytique de cette eau, par de l'hydrogène amené d'une source extérieure, au contact d'un catalyseur solide contenant du platine divisé associé à un support granulaire de charbon actif. Parmi les avantages offerts par une telle technique par rapport aux techniques conventionnelles de désoxygénation d'eau de mer, on peut retenir notamment la grande compacité de l'installation, l'absence de machines tournantes, l'absence de risques de moussage dans les colonnes ou de risques de colmatage dans les puits, le tout ajouté au fait que la quantité d'hydrogène nécessaire au procédé est très faible.

En poursuivant ses recherches, la demanderesse a trouvé que la désoxygénation hydrogénante catalytique de l'eau de mer pouvait être encore améliorée en mettant toujours en contact le catalyseur et l'eau de mer dans un réacteur, comme dans le cas de la technique de la citation susmentionnée, mais cette fois sans addition extérieure d'hydrogène et en maintenant sous l'influence d'un champ électrique le catalyseur immergé dans l'eau.

La citation US-A-4527626 décrit un procédé pour l'élimination de l'oxygène contenu, à l'état dissous, dans une eau saline et notamment dans l'eau de mer, qui fait appel à une électrolyse de l'eau à traiter pour produire de l'hydrogène, puis à une hydrogénation catalytique de l'oxygène dissous par l'hydrogène résultant de l'électrolyse. Plus précisément, dans ledit procédé on soumet l'eau à traiter à une filtration pour éliminer les matières solides en suspension dans l'eau, puis on électrolyse l'eau filtrée, en opérant dans une cellule d'électrolyse comportant un compartiment cathodique et un compartiment anodique séparés par une paroi perméable aux fluides, afin de produire de l'hydrogène à la cathode et du chlore à l'anode de la cellule d'électrolyse et enfin on fait passer Le courant d'eau chargé d'hydrogène, sortant du compartiment cathodique de la cellule d'électrolyse, au contact d'un catalyseur à base d'un métal du groupe VIII du Tableau Périodique des Eléments, notamment palladium, à l'état finement divisé, de manière à effectuer la réaction entre l'hydrogène et l'oxygène contenus dans l'eau au contact dudit catalyseur et ainsi à réaliser une élimination de l'oxygène dissous dans cette eau.

Le procédé selon l'invention se distingue du procédé de la citation US-A-4527626 par le fait que la génération du champ électrique dans le courant d'eau et la mise en contact du courant d'eau soumis à l'action du champ électrique avec le catalyseur sont réalisées simultanément dans un même espace réactionnel, en faisant appel à une mise en oeuvre particulière qui, entre autres, évite la production de chlore. Le procédé selon l'invention est plus compact que le procédé de la citation et, pour traiter un même débit d'eau avec un même taux de désoxygénation, il consomme moins d'énergie électrique et utilise une quantité moindre de catalyseur

La citation WO-A-9324412 décrit un procédé électrochimique de désoxygénation d'eau, dans lequel on soumet un courant de l'eau à traiter à l'action d'un champ électrique dans une cellule électrolytique comportant un compartiment cathodique, qui renferme un lit de particules métalliques ou de particules de carbone jouant le rôle de cathode et à travers lequel passe le courant d'eau à traiter, un compartiment anodique, muni d'une anode et rempli d'eau, et une membrane échangeuse de cations séparant le compartiment cathodique d'avec le compartiment anodique, ladite membrane laissant également passer les ions $OH^-$, le champ électrique étant créé en appliquant une tension électrique entre la cathode et l'anode de la cellule électrolytique.

L'invention a pour objet un procédé électrocatalytique de désoxygénation d'eaux de provenances diverses et tout particulièrement d'eau de mer, dans lequel on génère un champ électrique dans un courant de l'eau à traiter et l'on met ledit courant d'eau soumis à l'action du champ électrique en contact avec un catalyseur de réduction de l'oxygène conducteur de l'électricité, en réalisant la génération du champ électrique dans le courant d'eau et la mise en contact du courant d'eau, soumis à l'action du champ électrique, avec le catalyseur simultanément dans un même espace réactionnel, en faisant passer le courant d'eau à traiter, en continu, à travers un lit du catalyseur disposé dans le compartiment cathodique d'une cellule électrolytique, qui comporte un compartiment cathodique et un compartiment anodique pourvus, le premier, d'au moins une électrode fonctionnant en cathode et, le second, d'au moins une électrode fonctionnant en anode, et séparés par une paroi perméable aux cations et en établissant une tension électrique entre la cathode et l'anode de la cellule électrolytique pour consommer, dans le compartiment cathodique, l'oxygène dissous dans le courant d'eau en traitement et pour décomposer partiellement un liquide aqueux contenu dans le compartiment anodique, ledit procédé se caractérisant en ce que la paroi perméable séparant le compartiment anodique d'avec le compartiment cathodique est perméable aux seuls cations, en ce que l'on fait passer en continu, dans le compartiment anodique de la cellule électrolytique, une solution aqueuse conductrice d'un composant anolytique constitué d'au moins un composé choisi parmi les hydroxydes de métal alcalin, les acides perchlorique, boriques, phosphoriques, formique, acétique, trichloracétique et les sels de métal alcalin ou alcalinoterreux desdits acides, ladite solution aqueuse ayant une concentration en composant anolytique comprise entre 0,01 mole et 5 moles par litre et en ce qu'on établit la tension électrique entre la cathode et l'anode de la cellule électrolytique en maintenant le potentiel local d'électrode du compartiment cathodique, dans lequel est consommé l'oxygène dissous dans le courant d'eau en traitement, à des valeurs, par rapport à l'électrode normale à hydrogène, comprises entre +0,3 volt et -2 volts et en assurant au potentiel du compartiment anodique des valeurs, par rapport à l'électrode normale à hydrogène, supérieures à 0,4 volt permettant de former une quantité de solution aqueuse de composant anolytique décomposée propre à permettre le passage, dans le compartiment cathodique, de la quantité requise de cations assurant l'électroneutralité du courant d'eau traité sortant du compartiment cathodique.

Le catalyseur utilisé dans le procédé selon l'invention peut consister en une phase active renfermant au moins un métal et déposée sur un support conducteur de l'électricité. Avantageusement, la phase active du catalyseur est à base d'au moins un métal choisi parmi fer, platine, palladium, rhodium et iridium. Le support du catalyseur à phase active supportée est en un matériau, qui est conducteur de l'électricité et stable dans les conditions de mise en oeuvre du procédé. Ledit matériau peut être notamment choisi parmi les produits tels que charbon actif, graphite, mélanges de charbon actif et de graphite, cokes, brais de houille ou de pétrole, carbure de silicium, carbures de métaux lourds tels que carbure de tungstène, nitrure de silicium, nitrures de métaux lourds tels que nitrure de tungstène, métaux et alliages métalliques, par exemple acier inoxydable. Le support du catalyseur peut se présenter sous des formes diverses comme, par exemple, grains, billes, monolithes, grilles ou encore poudres plus ou moins fines. On peut encore faire appel à un catalyseur consistant essentiellement en carbone et en particulier en charbon actif et se présentant sous l'une ou l'autre des formes précisées ci-dessus pour le support du catalyseur à phase active.

La quantité pondérale du métal ou des métaux dans le catalyseur à phase active supportée peut varier assez largement et peut aller, par exemple, de 0,01% à 5% du poids du catalyseur. Avantageusement, ladite quantité représente 0,05% à 5% et de préférence 0,1% à 2% du poids du catalyseur.

Le procédé selon l'invention peut être mis en oeuvre, en particulier, en faisant appel au catalyseur à base de platine divisé sur support granulaire de charbon actif, qui est décrit dans la citation WO-A-9524360.

Comme indiqué plus haut, le composant anolytique présent dans la solution aqueuse conductrice contenue dans le compartiment anodique est constitué d'au moins un composé choisi parmi les hydroxydes de métal alcalin, les acides perchlorique, boriques, phosphoriques, et les sels de métal alcalin ou alcalinoterreux desdits acides.

Les hydroxydes de métal alcalin répondent à la formule générale MOH, dans laquelle M représente un métal alcalin, notamment sodium, potassium ou lithium. En particulier, l'hydroxyde MOH est choisi parmi l'hydroxyde de sodium et l'hydroxyde de potassium et consiste tout spécialement en hydroxyde de sodium.

Les sels de métal alcalin ou alcalino-terreux des acides précités sont, en particulier, les sels de sodium ou de potassium desdits acides.

Selon une forme préférée de réalisation, le composant anolytique est tout spécialement choisi parmi l'hydroxyde de sodium ou de potassium, l'acide orthophosphorique, l'acide perchlorique et les sels de sodium ou de potassium desdits acides.

Selon l'invention, on établit une différence de potentiel entre la cathode et l'anode de la cellule électrolytique en imposant un potentiel dans le compartiment cathodique, renfermant le catalyseur de réduction de l'oxygène traversé par le courant d'eau à traiter, et un potentiel dans le compartiment anodique, traversé par la solution aqueuse du composant anolytique, qui prennent, par rapport à l'électrode normale à hydrogène(ENH), des valeurs spécifiques situées dans les intervalles définis plus haut. Le maintien de ces potentiels conduit, dans le compartiment cathodique, à une consommation, par transformation en eau, de l'oxygène dissous dans le courant d'eau à traiter et, dans le compartiment anodique, à une formation d'oxygène et libération d'une quantité équivalente de cations, qui sont disponibles pour traverser la paroi perméable aux cations et assurer ainsi l'électroneutralité du courant d'eau passant dans le compartiment cathodique.

Lorsque le potentiel imposé dans le compartiment cathodique est compris entre 0,3 volt et -0,3 volt et de préférence entre 0,0 volt et -0,3 volt par rapport à l'électrode normale à hydrogène(ENH), la consommation de l'oxygène dissous se fait selon le schéma global (I) ci-après:

$$O_2 + 4H^+ + 4e^- \rightarrow 2H_2O$$

Lorsque le potentiel imposé dans le compartiment cathodique est compris entre -2 volts et -0,3 volt et de préférence entre -1,6 volt et -0,3 volt par rapport à ENH, la consommation de l'oxygène dissous fait appel au schéma réactionnel (II) ci-dessous:

$$2H^+ + 2e^- \rightarrow 2H \text{ adsorbé(sur le catalyseur)}$$

$$2H \text{ adsorbé} +1/2 \ O_2 \rightarrow H_2O$$

Dans le compartiment anodique, pour une solution aqueuse d'un composant anolytique alcalin, aux potentiels supérieurs à 0,4 volt et plus spécialement compris entre 0,4 volt et 2 volts et tout spécialement entre 0,4 volt et 0,9 volt par rapport à ENH, définis par la concentration en hydroxyde, on réalise une décomposition des ions hydroxydes avec production d'oxygène selon le schéma réactionnel(III) ci-dessous:

$$2OH^- \rightarrow \tfrac{1}{2} \ O_2 + H_2O + 2e^-$$

Pour une solution aqueuse d'un composant anolytique acide ou neutre, la réaction dans le compartiment anodique correspond à une décomposition de l'eau avec production d'oxygène selon le schéma réactionnel (IV) ci-après :

$$H_2O \rightarrow \tfrac{1}{2} \ O_2 + 2H^+ + 2e^-$$

Selon une forme de mise en oeuvre du procédé selon l'invention, la solution du composant anolytique, passant dans le compartiment anodique, circule en circuit fermé depuis le compartiment anodique en passant par une zone de dégazage, dans laquelle elle est débarrassée de l'oxygène produit lors de la décomposition dans le compartiment anodique, pour revenir audit compartiment. Avantageusement, la concentration en composant anolytique est maintenue constante dans le compartiment anodique, par exemple par addition d'une quantité d'appoint dudit composant à la solution dégazée recyclée au compartiment anodique. De préférence, la circulation de la solution du composant anolytique dans le compartiment anodique s'effectue à contre-courant de la circulation du courant d'eau à traiter passant dans le compartiment cathodique.

La paroi perméable aux cations, qui sépare les compartiments cathodique et anodique, peut être notamment une paroi du type séparateur mécanique comme une paroi céramique ou encore une paroi du type membrane polymère échangeuse de cations comme, par exemple, une membrane échangeuse d'ions du type Nafion.

La différence de potentiel ou tension établie entre la cathode et l'anode de la cellule électrolytique, lors de la mise en oeuvre du procédé selon l'invention, peut avoir une valeur constante ou , au contraire, une valeur variant en fonction du temps. On peut, en particulier, opérer de telle sorte que ladite tension varie, en continu ou en discontinu, de manière cyclique en fonction du temps, c'est-à-dire que le signal de tension appliqué entre cathode et anode soit la répétition, permanente ou intermittente, d'un signal élémentaire.

Avantageusement, le traitement de l'eau dans la cellule électrolytique est mis en oeuvre à des températures comprises entre 0°C et 50°C et plus particulièrement entre 4°C et 30°C.

Un dispositif pour la mise en oeuvre du procédé selon l'invention, est du type comportant au moins une cellule électrolytique renfermant un compartiment cathodique et un compartiment anodique, séparés par une paroi perméable aux cations, le compartiment cathodique étant pourvu d'une entrée connectée à un conduit d'amenée de l'eau à traiter et d'une sortie connectée à un conduit d'évacuation de liquide et étant muni d'au moins une électrode adaptée pour jouer le rôle de cathode et le compartiment anodique étant pourvu d'un conduit d'amenée de liquide et d'un conduit d'évacuation de liquide et étant muni d'au moins une électrode adaptée pour jouer le rôle d'anode, le compartiment cathodique de la cellule électrolytique renfermant, en outre, un lit d'un catalyseur de réduction de l'oxygène, qui est disposé entre les entrée et sortie du compartiment cathodique et qui consiste en carbone, notamment charbon actif, ou en un catalyseur constituée d'une phase active renfermant au moins un métal et déposée sur un support conducteur de l'électricité.

Dans une forme de réalisation, le dispositif comporte, en outre, un ballon de dégazage pourvu d'une entrée et d'une sortie pour les liquides et, en tête, d'une sortie pour les gaz, lesdites entrée et sortie pour les liquides étant connectées, respectivement, au conduit d'évacuation et au conduit d'amenée de liquide équipant le compartiment anodique.

Avantageusement, une tubulure d'amenée d'un liquide d'appoint est montée en dérivation sur le conduit d'amenée de liquide au compartiment anodique.

De préférence, le conduit d'amenée de liquide équipant le compartiment anodique de la cellule électrolytique est disposé du même côté de ladite cellule que le conduit d'évacuation d'eau équipant le compartiment cathodique, tandis que le conduit d'évacuation de liquide du compartiment anodique est situé du côté du conduit d'amenée d'eau équipant le compartiment cathodique, avec comme résultat que l'eau passant dans le compartiment cathodique circule à contre-courant du liquide passant dans le compartiment anodique.

Les électrodes et amenées de courant associées équipant les compartiments cathodique et anodique de la cellule électrolytique sont en un matériau conducteur de l'électricité et inerte vis à vis des milieux réactionnels présents dans les compartiments cathodique et anodique ,par exemple carbone ou papier graphité en ce qui concerne les amenées de courant ou encore acier inoxydable pour la cathode. Ces électrodes amenées de courant peuvent se présenter, avantageusement, sous la forme de plaques, perforées ou non, ou de grilles disposées parallèlement à la paroi perméable aux cations séparant les compartiments anodique et cathodique de la cellule électrolytique. Toutefois, d'autres dispositions peuvent être encore envisagées et notamment, quoique moins efficace, une disposition où les électrodes amenées de courant sont perpendiculaires à ladite paroi perméable aux cations.

Le dispositif pour la mise en oeuvre du procédé selon l'invention, peut comporter une pluralité de cellules électrolytiques, chaque cellule renfermant un compartiment cathodique et un compartiment anodique, séparés par une paroi perméable aux cations, le compartiment cathodique étant pourvu d'une entrée connectée à un conduit d'amenée de l'eau à traiter et d'une sortie connectée à un conduit d'évacuation de liquide et étant muni d'au moins une électrode adaptée pour jouer le rôle de cathode et le compartiment anodique étant pourvu d'un conduit d'amenée de liquide et d'un conduit d'évacuation de liquide et étant muni d'au moins une électrode adaptée pour jouer le rôle d'anode, le compartiment cathodique de la cellule électrolytique renfermant, en outre, un lit d'un catalyseur de réduction de l'oxygène, qui est disposé entre les entrée et sortie du compartiment cathodique et qui consiste en carbone, notamment charbon actif, ou en un catalyseur constituée d'une phase active renfermant au moins un métal et déposée sur un support conducteur de l'électricité. Dans ce cas les cellules électrolytiques fonctionnent en parallèle, les conduits d'amenée d'eau à traiter et les conduits d'évacuation d'eau traitée, qui sont connectés respectivement aux entrées et aux sorties des compartiments cathodiques des cellules, sont reliés, les premiers, à une conduite commune d'alimentation en eau à traiter et, les seconds, à une conduite commune d'évacuation d'eau traitée, tandis que les conduits d'amenée de liquide et les conduits d'évacuation de liquide équipant les compartiments anodiques desdites cellules sont reliés, les premiers, à une conduite commune d'amenée de liquide anodique et, les seconds, à une conduite commune d'évacuation de liquide anodique et, en outre, les électrodes(cathodes) des compartiments cathodiques et les électrodes(anodes) des compartiments anodiques sont connectables, les premières, au pôle négatif et, les secondes, au pôle positif d'un générateur de courant approprié

Le dispositif à plusieurs cellules peut également comporter, en outre, un ballon de dégazage pourvu d'une entrée et d'une sortie pour les liquides et, en tête, d'une sortie pour les gaz, lesdites entrée et sortie pour les liquides étant connectées, respectivement, à la conduite commune d'évacuation et à la conduite commune d'amenée de liquide anodique. Une tubulure d'amenée d'un liquide d'appoint peut être encore montée en dérivation sur la conduite commune d'amenée de liquide anodique.

Chaque cellule du dispositif pluricellule peut avantageusement se présenter sous la forme d'un parallélépipède d'épaisseur e faible devant sa longueur L et sa largeur 1, la paroi perméable aux cations séparant les compartiments cathodique et anodique de la cellule étant disposée parallèlement aux grandes faces du parallélépipède, tandis que la grande face côté compartiment cathodique est agencée pour constituer une cathode et que la grande face côté compartiment anodique est agencée pour former une anode et que les cellules parallélépipédiques sont accolées grande face contre grande face de telle sorte que les compartiments adjacents de deux cellules consécutives soient de même nature, c'est-à-dire tous deux cathodiques ou tous deux anodiques.

On peut choisir les longueur L, largeur 1 et épaisseur e de chaque cellule parallélépipédique de telle sorte que le rapport l:L soit compris entre 0,1:1 et 1:1 et que le rapport e:L soit compris entre 0,005:1 et 0,1:1 et plus particulièrement entre 0,01:1 et 0,05:1.

D'autres caractéristiques et avantages de l'invention apparaîtront mieux à la lecture de la description suivante de deux de ses formes de mise en oeuvre présentées en référence au dessin annexé, sur lequel

- la figure 1 représente schématiquement un dispositif du type à une seule cellule électrolytique, pour la désoxygénation d'eau de mer par le procédé selon l'invention;
- la figure 2 schématise une disposition des électrodes dans le compartiment cathodique, qui constitue une alternative de celle de la figure 1; et
- la figure 3 schématise un dispositif du type à pluralité de cellules électrolytiques pour la désoxygénation d'eau de mer par le procédé selon l'invention.

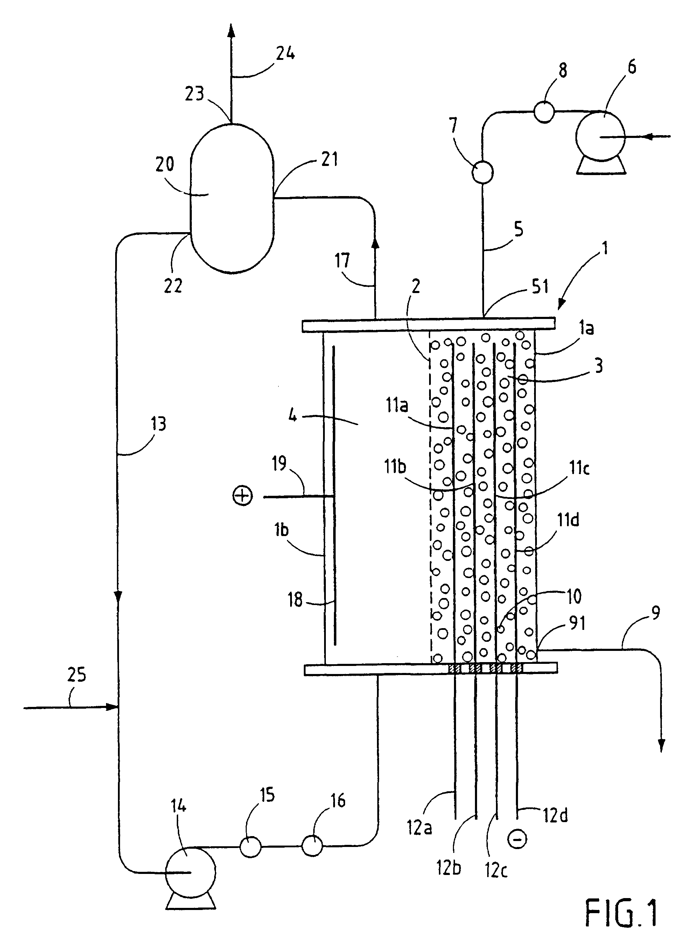

En se référant à la figure 1, le dispositif schématisé comprend une cellule électrolytique 1 formant réacteur électrocatalytique, qui se présente en forme de parallélépipède, de grandes faces la et 1b, et est divisée, par une paroi 2, perméable aux seuls cations et parallèle auxdites grandes faces, en un compartiment cathodique 3 et un compartiment anodique 4. Les longueur L, largeur l et épaisseur e de la cellule électrolytique sont telles que les rapports l:L et e:L ont des valeurs comprises dans les fourchettes données précédemment. Le compartiment cathodique de la cellule est pourvu, à sa partie supérieure, d'une entrée 51 reliée à un conduit 5 d'amenée d'eau à traiter, sur lequel sont montés une pompe 6, un régulateur de température 7 et un régulateur de débit 8, et, à sa partie inférieure, d'une sortie 91 reliée à un conduit 9 d'évacuation d'eau traitée. Le compartiment cathodique 3 renferme un lit d'un catalyseur de réduction de l'oxygène en eau 10, dans lequel plongent, par exemple, quatre électrodes 11a, 11b, 11c et 11d en un matériau apte à constituer une cathode, lesdites électrodes se présentant, par exemple, sous la forme de grilles planes, disposées parallèlement à la paroi 2 perméable aux cations et prolongées, hors de la cellule 1, par des amenées de courant électrique, respectivement 12a, 12b, 12c et 12d. Ces amenées de courant sont reliées entre elles par un jeu convenable de résistances, non représenté, permettant un réglage spatial du potentiel dans le compartiment cathodique à des valeurs situées dans les intervalles définis plus haut et sont connectées, en cours de fonctionnement du dispositif, au pôle négatif d'une source de courant appropriée. Le compartiment anodique 4 de la cellule électrolytique 1 est pourvu, à sa partie inférieure, d'un conduit 13 d'amenée d'un liquide, ici une solution aqueuse d'un composant anolytique comme, par exemple, NaOH, acide orthophosphorique, acide perchlorique ou encore orthophosphate ou perchlorate de sodium, sur lequel sont montés une pompe 14, un régulateur de débit 15 et un régulateur de température 16, et , à sa partie supérieure, d'un conduit 17 d'évacuation de liquide, ici solution aqueuse du composant anolytique. Le compartiment anodique est encore équipé d'une électrode 18 en un matériau apte à constituer une anode, ladite électrode se présentant, par exemple, sous la forme d'une plaque ou d'une grille plane, disposée parallèlement à la paroi 2 perméable aux cations et située au voisinage de la paroi 1b de la cellule électrolytique. Cette électrode 18 est prolongée, hors de la cellule 1, par une amenée 19 de courant électrique, qui est connectée, en cours de fonctionnement du dispositif, au pôle positif de la source de courant. Un ballon 20 de dégazage, pourvu d'une entrée 21 et d'une sortie 22 pour les liquides, ici solution aqueuse de composant anolytique, et, en tête, d'une sortie 23 pour les gaz prolongée par un conduit 24 d'évacuation de gaz, est connecté, par son entrée 21, au conduit 17 d'évacuation de liquide équipant le compartiment anodique et, par sa sortie 22, au conduit 13 d'amenée de liquide audit compartiment anodique. Une tubulure 25 d'amenée d'un liquide d'appoint, ici solution aqueuse de composant anolytique, est montée en dérivation sur le conduit 13 d'amenée de liquide au compartiment anodique, en amont de la pompe 14.

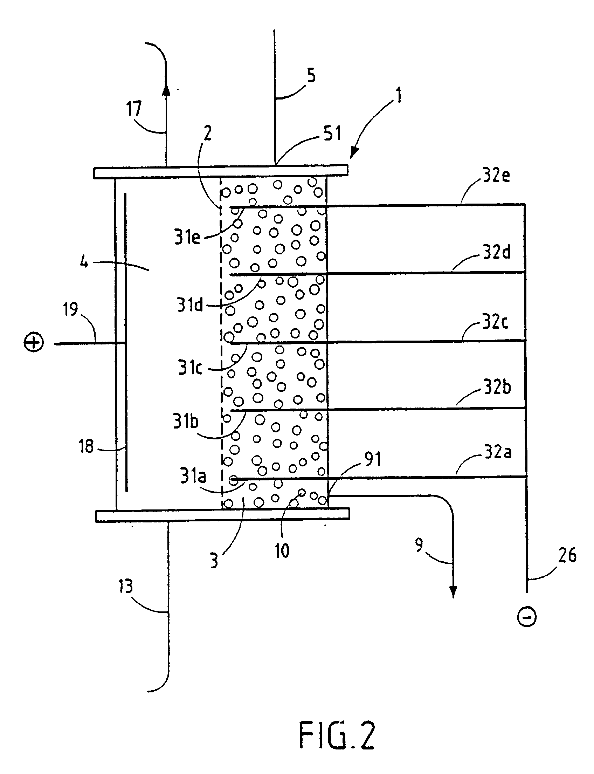

Comme schématisé sur la figure 2, représentant une forme alternative de la cellule électrolytique de la figure 1 et où les éléments similaires à ceux de la figure 1 sont désignés par les mêmes repères numériques, les électrodes de type cathode, qui équipent le compartiment cathodique 3 de la cellule électrolytique 1 et sont ici au nombre de cinq, à savoir 31a à 31e, se présentent encore sous la forme de grilles planes en un matériau apte à constituer une cathode, mais sont maintenant disposées, dans le lit 10 de catalyseur, perpendiculairement à la paroi 2 perméable aux cations. Chacune des électrodes de type cathode 31a à 31e est prolongée, hors de la cellule électrolytique 1, par une amenée de courant, respectivement 32a à 32e,connectée,en cours de fonctionnement du dispositif, à la borne négative de la source de courant, par l'intermédiaire d'un conducteur électrique commun 26.

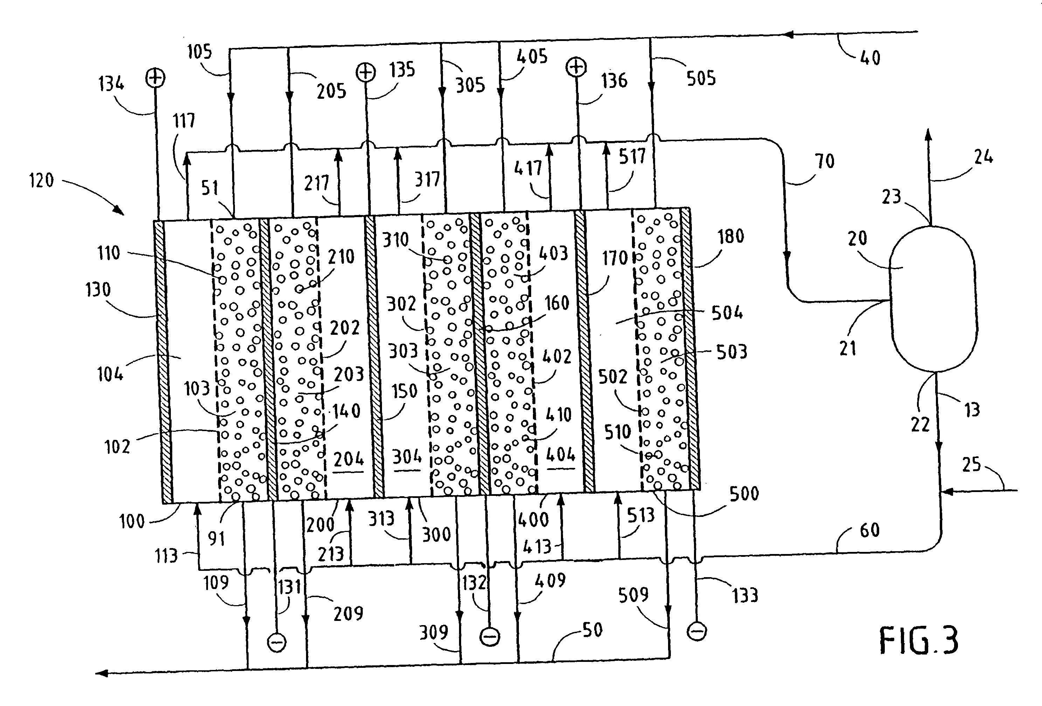

En se référant à la figure 3, le dispositif schématisé comprend un réacteur électrocatalytique 120, en forme de parallélépipède présentant deux grandes faces 130 et 180 et divisé, par quatre séparations 140, 150, 160 et 170 parallèles aux grandes faces 130 et 180,en cinq cellules électrolytiques identiques en forme de parallélépipède, à savoir cellules 100, 200, 300, 400 et 500,montées en parallèle et de structure similaire, laquelle structure est voisine de celle de la cellule électrolytique de la figure 1. Chaque cellule électrolytique, respectivement 100, 200, 300, 400 et 500, est divisée, par une paroi parallèle auxdites grandes faces et perméable aux seuls cations, respectivement 102, 202, 302, 402 et 502,en un compartiment cathodique, respectivement 103, 203, 303, 403 et 503, et un compartiment anodique, respectivement 104, 204, 304, 404 et 504.Les longueur L, largeur 1 et épaisseur e de chacune des cellules électrolytiques 100, 200, 300, 400 et 500 sont telles que les rapports l:L et e:L ont des valeurs comprises dans les fourchettes données précédemment. Le compartiment cathodique, respectivement 103, 203, 303, 403 et 503, de chaque cellule électrolytique, présente, à sa partie supérieure, une entrée, par exemple entrée 51 pour le compartiment cathodique 103, reliée à un conduit d'amenée d'eau à traiter, respectivement 105, 205, 305, 405 et 505, connecté à une conduite commune 40 d'alimentation en eau à traiter et, à sa partie inférieure, une sortie, par exemple sortie 91 pour le compartiment cathodique 103, prolongée par un conduit d'évacuation d'eau traitée, respectivement 109, 209,

EP 0 894 077 B1

309, 409 et 509,débouchant dans une conduite commune 50 d'évacuation d'eau traitée. La conduite commune 40 d'alimentation en eau à traiter est équipée d'une pompe, d'un régulateur de débit et d'un régulateur de température non représentés. Le compartiment anodique, respectivement 104, 204, 304, 404 et 504, de chaque cellule électrolytique, est pourvu, à sa partie inférieure, d'un conduit, respectivement 113, 213, 313, 413 et 513, pour l'amenée d'un liquide, ici une solution aqueuse d'un composant anolytique, par exemple, NaOH, acide orthophosphorique, acide perchlorique ou encore orthophosphate ou perchlorate de sodium, lequel conduit est connecté à une conduite commune 60 d'alimentation en ledit liquide et, à sa partie supérieure, d'un conduit, respectivement 117, 217, 317, 417 et 517, pour l'évacuation du liquide présent dans le compartiment anodique, ledit conduit débouchant dans une conduite commune 70 d'évacuation de liquide anodique. La conduite 60 d'alimentation est équipée d'une pompe, d'un régulateur de débit et d'un régulateur de température non représentés. La grande face 180 du compartiment cathodique 503 de la cellule 500, ainsi que la séparation 140 entre les compartiments cathodiques 103 et 203 des cellules accolées 100 et 200 et la séparation 160 entre les compartiments cathodiques 303 et 403 des cellules accolées 300 et 400 sont agencées pour constituer chacune une électrode apte à fonctionner en cathode, la séparation 140 étant une cathode commune aux cellules 100 et 200 et la séparation 160 formant une cathode commune aux cellules 300 et 400. De même, la grande face 130 du compartiment anodique 104 de la cellule 100, ainsi que la séparation 150 entre les compartiments anodiques des cellules accolées 200 et 300 et la séparation 170 entre les compartiments anodiques des cellules accolées 400 et 500 sont agencées pour constituer chacune une électrode apte à former une anode, la séparation 150 étant une anode commune aux cellules 200 et 300 et la séparation 170 formant une anode commune aux cellules 400 et 500. Le compartiment cathodique, respectivement 103, 203, 303, 403 et 503, de chaque cellule, respectivement 100, 200, 300, 400 et 500, est rempli d'un lit d'un catalyseur de réduction de l'oxygène en eau tel que défini précédemment, respectivement 110, 210, 310, 410 et 510. Les électrodes 140, 160 et 180 jouant le rôle de cathodes sont prolongées, hors des cellules associées, par des amenées de courant, respectivement 131, 132 et 133,connectées,en cours de fonctionnement du dispositif, à la borne négative d'une source de courant appropriée. De même, les électrodes 130, 150 et 170 jouant le rôle d'anodes sont prolongées, hors des cellules associées, par des amenées de courant, respectivement 134, 135 et 136, connectées, en cours de fonctionnement du dispositif, à la borne positive de la source de courant. Un ballon 20 de dégazage, pourvu d'une entrée 21 et d'une sortie 22 pour les liquides, ici solution aqueuse de composant anolytique, et, en tête, d'une sortie 23 pour les gaz prolongée par un conduit 24 d'évacuation de gaz, est connecté, par son entrée 21, à la conduite commune 70 d'évacuation de liquide anodique et, par sa sortie 22, à la conduite commune 60 d'alimentation. Une tubulure 25 d'amenée d'un liquide d'appoint, ici solution aqueuse de composant anolytique, est montée en dérivation sur la conduite commune 60 d'alimentation.

Le déroulement du procédé dans le dispositif à cellule électrolytique unique de la figure 1 ou 2 ou dans le dispositif à plusieurs cellules électrolytiques de la figure 3 peut être schématisé comme suit :

En faisant appel à un générateur approprié de courant électrique , on établit, entre cathodes et anode de la cellule électrolytique 1 du dispositif de la figure 1 ou 2 ou de chacune des cellules, respectivement 100, 200, 300,400 et 500,du réacteur électrocatalytique 120 du dispositif de la figure 3, une différence de potentiel propre à maintenir le potentiel électrique dans le compartiment cathodique et dans le compartiment anodique de chacune desdites cellules électrolytiques à des valeurs choisies dans- les fourchettes définies précédemment. L'eau à traiter est amenée en continu, par le conduit approprié, dans le compartiment cathodique 3 de la cellule électrolytique 1 du dispositif de la figure 1 ou 2 ou dans le compartiment cathodique, respectivement 103, 203, 303, 403 et 503, de chacune des cellules électrolytiques, respectivement 100, 200, 300, 400 et 500, du réacteur électrocatalytique du dispositif de la figure 3 et passe dans ledit compartiment cathodique, maintenu au potentiel approprié, au contact du catalyseur présent dans ce compartiment, avant d'être évacuée hors du compartiment cathodique par le conduit d'évacuation équipant ce compartiment. Une solution aqueuse de composant anolytique, par exemple NaOH, acide orthophosphorique, acide perchlorique ou encore orthophosphate ou perchlorate de sodium, est amenée en continu, par le conduit approprié, au compartiment anodique 4 de la cellule électrolytique 1 du dispositif de la figure 1 ou 2 ou au compartiment anodique, respectivement 104, 204, 304, 404 et 504, de chaque cellule électrolytique, respectivement 100, 200, 300, 400 et 500, du réacteur catalytique 120 du dispositif de la figure 3 et passe dans ledit compartiment anodique, avant d'être évacuée, par le conduit approprié, vers le ballon de dégazage 20. Dans ce ballon, ladite solution est dégazée, avant d'être recyclée, après ajustement, si nécessaire, de sa concentration en composant anolytique par addition d'une quantité d'appoint de composant anolytique par la tubulure 25, pour constituer la solution de composant anolytique alimentant le compartiment anodique de chaque cellule électrolytique.

Aux potentiels imposés dans le compartiment cathodique de la cellule électrolytique, l'oxygène présent dans l'eau à traiter, qui traverse le lit du catalyseur remplissant ledit compartiment cathodique, est réduit électrocatalytiquement en eau, et par le conduit d'évacuation dudit compartiment cathodique on soutire un courant d'eau désoxygénée. La réduction précitée est réalisée selon le schéma global (I), si le potentiel dans le compartiment cathodique est compris entre 0,3 volt et -0,3 volt par rapport à ENH ou selon le schéma réactionnel (II), si le potentiel dans le compartiment cathodique est compris entre -2 volts et -0,3 volt. La masse du catalyseur étant en contact avec les électrodes amenées de courant, celle-ci a un rôle électrocatalytique et participe de ce fait à l'électroréduction de l'oxygène. Cette réduction de l'oxygène consomme une certaine quantité des protons présents dans l'eau en cours de traitement.

Au potentiel imposé dans le compartiment anodique, lorsque ce dernier renferme une solution aqueuse de composant anolytique alcalin (hydroxyde), une partie des ions OH⁻ présents dans ledit compartiment, qui sont fournis par la solution aqueuse de composant anolytique, est transformée en oxygène selon le schéma réactionnel (III), lequel oxygène est évacué dans la solution aqueuse de composant anolytique sortant du compartiment anodique et libéré dans le ballon de dégazage 20, d'où il est recueilli par le conduit 24. Pour une solution aqueuse de composant anolytique acide ou neutre, le dégagement d'oxygène dans le compartiment anodique correspond à une décomposition de l'eau de ladite solution selon le schéma réactionnel (IV). La quantité d'oxygène produite dans le compartiment anodique est au moins égale à la quantité d'oxygène réduite électrocatalytiquement dans le compartiment cathodique. Les cations du compartiment anodique, qui sont en excès par rapport à la quantité requise pour assurer l'électroneutralité du liquide anodique, traversent la paroi poreuse aux cations de la cellule électrolytique, à savoir paroi 2 de la cellule 1 du dispositif de la figure 1 ou 2 ou chacune des parois poreuses aux cations, respectivement 102, 202, 302, 402 et 502, des cellules électrolytiques, respectivement 100, 200, 300, 400 et 500, du dispositif de la figure 3 et passent dans le compartiment cathodique, où ils assurent l'électroneutralité de l'eau circulant dans le compartiment cathodique desdites cellules électrolytiques.

Pour compléter la description précédente, on donne ci-après, à titre non limitatif, trois exemples de mise en oeuvre du procédé selon l'invention.

EXEMPLE 1 :

On réalisait des essais de désoxygénation d'eau de mer en utilisant un dispositif analogue au dispositif à cellule électrolytique unique schématisé sur la figure 1 du dessin annexé.

La paroi poreuse perméable aux seuls cations, séparant les compartiments cathodique et anodique de la cellule électrolytique, consistait en une membrane échangeuse de cations du type membrane Nafion

Le catalyseur remplissant le compartiment cathodique de la cellule électrolytique consistait en platine divisé déposé, à raison de 1% en poids du catalyseur, sur un support formé de grains de charbon actif ayant une surface spécifique, déterminée par la méthode B.E.T. d'adsorption d'azote, égale à 1200 $m^2$/g, le platine divisé étant présent dans une couche superficielle desdits grains et présentant une dispersion D égale à 35%. Comme indiqué dans la citation WO-A-9524360, la dispersion D du platine dans les grains de catalyseur est définie comme étant le rapport du nombre d'atomes de platine en surface des grains au nombre total d'atomes de platine contenus dans lesdits grains.

Les électrodes du type cathode, plongeant dans le lit de catalyseur remplissant le compartiment cathodique de la cellule électrolytique, étaient en papier graphité, tandis que l'électrode équipant le compartiment anodique de ladite cellule, était en acier inoxydable.

On traitait une eau de mer renfermant une quantité d'oxygène égale à $8 \times 10^{-4}$% en poids pour produire une eau de mer traitée ayant une teneur en oxygène égale à $20 \times 10^{-7}$% en poids.

L'eau de mer à traiter était amenée au compartiment cathodique de la cellule électrolytique et évacuée dudit compartiment avec un débit de $500 \times 10^3$ kg par heure. La solution aqueuse de composant anolytique, circulant dans le compartiment anodique de la cellule électrolytique, consistait en une solution aqueuse de NaOH de concentration 0,5 N, ladite solution étant amenée et évacuée du compartiment anodique avec un débit de 25000 kg/heure.

La tension électrique établie entre cathodes et anode de la cellule électrolytique assurait le maintien d'un potentiel compris entre +0,1 volt et -1,2 volt, par rapport à ENH, dans le compartiment cathodique. La température de la cellule électrolytique était maintenue à 15°C au cours du traitement.

A titre de première comparaison, on réalisait également une désoxygénation d'une eau de mer identique à celle amenée au traitement électrocatalytique selon l'invention, jusqu'à la teneur précitée en oxygène égale à $20 \times 10^{-7}$% en poids, en faisant appel à une hydrogénation catalytique par l'hydrogène comme proposé dans la citation WO-A-9524360, en présence d'un catalyseur identique à celui utilisé dans les essais selon l'invention.

A titre de deuxième comparaison, on réalisait encore une désoxygénation d'une eau de mer identique à celle amenée au traitement électrocatalytique selon l'invention, jusqu'à la teneur susmentionnée en oxygène égale à $20 \times 10^{-7}$% en poids, en opérant comme indiqué dans la citation US-A-4527626, c'est à dire en électrolysant tout d'abord l'eau de mer, dans une cellule d'électrolyse, pour produire l'hydrogène requis pour l'hydrogénation, puis en faisant passer le courant d'eau renfermant ledit hydrogène au contact d'un catalyseur d'hydrogénation contenu dans un réacteur distinct de la cellule d'électrolyse et en série avec cette dernière, ledit catalyseur étant identique au catalyseur utilisé dans les autres essais.

Les conditions opératoires spécifiques aux différents essais sont rassemblées dans le tableau présenté ci-après.

L'examen du contenu dudit tableau fait ressortir que le procédé électrocatalytique de désoxygénation d'eau de mer selon l'invention est plus performant que le procédé de désoxygénation par hydrogénation catalytique selon la citation WO-A-9524360 ou que le procédé de désoxygénation selon la citation US-A-4527626 utilisant une électrolyse de l'eau suivie d'une hydrogénation catalytique, en ce sens que, pour atteindre un même niveau d'oxygène résiduel dans l'eau de mer traitée, il utilise une quantité de catalyseur nettement plus faible que l'un ou l'autre des procédés antérieurs précités et il consomme, en outre, une énergie électrique moindre que le procédé de la citation US-A-4527626.

TABLEAU

| Nature du traitement | Désoxygénation électrocatalytique (invention) | | Hydrogénation catalytique (WO-A-9524360) | Electrolyse, puis hydrogénation (US-A-4527626) |
|---|---|---|---|---|
| Température du réacteur (°C) | 15 | 15 | 15 | 15 |
| Densité de courant (mA/g de catalyseur) | 50 | 2 | 0 | |
| Quantité d'hydrogène utilisée (kg/h) | 0 | 0 | 0,5 | 0,5 |
| Volume de catalyseur ($m^3$) | 0,54 (RF=100%) | 13,4 (RF=100%) | 40 | 40 |
| | 1,08 (RF=50%) | 27 (RF=50%) | | |
| Puissance électrique consommée pour RF=100% (kW) | 15 | 15,6 | 0 | 25,7 |
| RF= rendement faradique | | | | |

EXEMPLE 2 :

On réalisait un essai de désoxygénation d'eau de mer en utilisant un dispositif analogue au dispositif à cellule électrolytique unique schématisé sur la figure 1 du dessin annexé.

La paroi poreuse perméable aux seuls cations, séparant les compartiments cathodique et anodique de la cellule électrolytique, consistait en une membrane échangeuse de cations du type membrane Nafion

Le catalyseur remplissant le compartiment cathodique de la cellule électrolytique se composait de grains de charbon actif ayant un diamètre moyen de 2,5 mm et présentant une surface spécifique, déterminée par la méthode B.E.T. d'adsorption d'azote, égale à 750 $m^2$/g.

Les électrodes du type cathode, plongeant dans le lit de catalyseur remplissant le compartiment cathodique de la cellule électrolytique, étaient en papier graphité, tandis que l'électrode équipant le compartiment anodique de ladite cellule, était en titane recouvert d'un oxyde mixte de ruthénium et de titane à raison de 20 $m^2$/g d'électrode.

On traitait une eau de mer renfermant une quantité d'oxygène égale à $8 \times 10^{-4}$% en poids pour produire une eau de mer traitée ayant une teneur en oxygène égale à $20 \times 10^{-7}$% en poids.

L'eau de mer à traiter était amenée au compartiment cathodique de la cellule électrolytique et évacuée dudit compartiment avec un débit de $500 \times 10^3$ kg par heure. La solution aqueuse de composant anolytique, circulant dans le compartiment anodique de la cellule électrolytique, consistait en une solution aqueuse d'acide perchlorique ($HClO_4$) de concentration 0,1 mole/l, ladite solution étant amenée et évacuée du compartiment anodique avec un débit de 25000 kg/heure.

La tension électrique établie entre cathodes et anode de la cellule électrolytique assurait le maintien d'un potentiel égal à -0,850 volt, par rapport à ENH, dans le compartiment cathodique. La température de la cellule électrolytique était maintenue à 11°C au cours du traitement.

Les conditions opératoires spécifiques sont rassemblées ci-après :

. température : 11°C
. vitesse d'écoulement en fût vide : 0,01 m/s
. densité de courant/g de catalyseur : 4 mA
. quantité d'hydrogène utilisée : 0
. volume de catalyseur : 13 $m^3$ (RF=100%)
. puissance électrique : 40 kW

. tension de cellule      : 3 volts
. potentiel cathodique imposé/ENH     : -0,850 volt

EXEMPLE 3 :

On réalisait un essai de désoxygénation d'eau de mer en utilisant un dispositif analogue au dispositif à cellule électrolytique unique schématisé sur la figure 1 du dessin annexé.

La paroi poreuse perméable aux seuls cations, séparant les compartiments cathodique et anodique de la cellule électrolytique, consistait en une membrane échangeuse de cations du type membrane Nafion

Le catalyseur remplissant le compartiment cathodique de la cellule électrolytique consistait en platine divisé déposé, à raison de 1% en poids du catalyseur, sur un support formé de grains de graphite ayant un diamètre moyen de 2,5 mm et présentant une surface spécifique, déterminée par la méthode B.E.T. d'adsorption d'azote, égale à 1 $m^2/g$.

Les électrodes du type cathode, plongeant dans le lit de catalyseur remplissant le compartiment cathodique de la cellule électrolytique, étaient en papier graphité, tandis que l'électrode équipant le compartiment anodique de ladite cellule, était en titane recouvert d'un oxyde mixte de ruthénium et de titane à raison de 20 $m^2/g$ d'électrode.

On traitait une eau de mer renfermant une quantité d'oxygène égale à $8 \times 10^{-4}$% en poids pour produire une eau de mer traitée ayant une teneur en oxygène égale à $20 \times 10^{-7}$% en poids.

L'eau de mer à traiter était amenée au compartiment cathodique de la cellule électrolytique et évacuée dudit compartiment avec un débit de $500 \times 10^3$ kg par heure. La solution aqueuse de composant anolytique, circulant dans le compartiment anodique de la cellule électrolytique, consistait en une solution aqueuse d'acide orthophosphorique ($H_3PO_4$) de concentration 0,4 mole/l, ladite solution étant amenée et évacuée du compartiment anodique avec un débit de 25000 kg/heure.

La tension électrique établie entre cathodes et anode de la cellule électrolytique assurait le maintien d'un potentiel égal à -0,550 volt, par rapport à ENH, dans le compartiment cathodique. La température de la cellule électrolytique était maintenue à 11°C au cours du traitement.

Les conditions opératoires spécifiques sont rassemblées ci-après :

. température     : 11°C
. vitesse d'écoulement en fût vide     : 0,1 m/s
. densité de courant/g de catalyseur     : 3 mA
. quantité d'hydrogène utilisée     : 0
. volume de catalyseur     : 5 $m^3$ (RF=100%)
. puissance électrique     : 37 kW
. tension de cellule     : 2,8 volts
. potentiel cathodique imposé/ENH     : -0,550 volt

**Revendications**

1. Procédé électrocatalytique de désoxygénation d'eaux de provenances diverses et tout particulièrement d'eau de mer, dans lequel on génère un champ électrique dans un courant de l'eau à traiter et l'on met ledit courant d'eau soumis à l'action du champ électrique en contact avec un catalyseur de réduction de l'oxygène conducteur de l'électricité, en réalisant la génération du champ électrique dans le courant d'eau et la mise en contact du courant d'eau, soumis à l'action du champ électrique, avec le catalyseur simultanément dans un même espace réactionnel, en faisant passer le courant d'eau à traiter, en continu, à travers un lit du catalyseur disposé dans le compartiment cathodique d'une cellule électrolytique, qui comporte un compartiment cathodique et un compartiment anodique pourvus, le premier, d'au moins une électrode fonctionnant en cathode et, le second, d'au moins une électrode fonctionnant en anode, et séparés par une paroi perméable aux cations et en établissant une tension électrique entre la cathode et l'anode de la cellule électrolytique pour consommer, dans le compartiment cathodique, l'oxygène dissous dans le courant d'eau en traitement et pour décomposer partiellement un liquide aqueux contenu dans le compartiment anodique, ledit procédé se caractérisant en ce que la paroi perméable séparant le compartiment anodique d'avec le compartiment cathodique est perméable aux seuls cations, en ce que l'on fait passer en continu, dans le compartiment anodique de la cellule électrolytique, une solution aqueuse conductrice d'un composant anolytique constitué d'au moins un composé choisi parmi les hydroxydes de métal alcalin, les acides perchlorique, boriques, phosphoriques, formique, acétique, trichloracétique et les sels de métal alcalin ou alcalinoterreux desdits acides, ladite solution aqueuse ayant une concentration en composant anolytique comprise entre 0,01 mole et 5 moles par litre et en ce qu'on établit la tension électrique entre la cathode et l'anode de la cellule électrolytique en maintenant le potentiel local d'électrode du compartiment cathodique, dans lequel est consommé l'oxygène dissous dans le courant d'eau en traitement, à des valeurs, par rapport à l'électrode normale à hydrogène, comprises entre +0,3 volt et -2 volts et en assurant au potentiel du compartiment anodique des valeurs, par rapport à l'électrode normale à hydrogène, supérieures à 0,4 volt permettant de former une quantité de solution aqueuse de composant anolytique décomposée propre à permettre le passage, dans le compartiment cathodique, de la quantité requise de cations assurant l'électroneutralité du courant d'eau traité sortant du compartiment cathodique.

2. Procédé selon la revendication 1, **caractérisé en ce que** le catalyseur consiste en une phase active renfermant au moins un métal et déposée sur un support conducteur de l'électricité.

3. Procédé selon la revendication 2, **caractérisé en ce que** la phase active du catalyseur est à base d'au moins un métal choisi parmi platine, palladium, rhodium, iridium et fer.

4. Procédé selon la revendication 2 ou 3, **caractérisé en ce que** la quantité pondérale du métal ou des métaux dans le catalyseur représente 0,01% à 5% du poids du catalyseur.

5. Procédé selon la revendication 4, **caractérisé en ce que** la quantité pondérale du métal ou des métaux dans le catalyseur représente 0,05% à 5% et plus spécialement 0,1% à 2% du poids du catalyseur.

6. Procédé selon l'une des revendications 2 à 5, **caractérisé en ce que** le support conducteur du catalyseur est en un matériau choisi parmi charbon actif, graphite, carbure de silicium, carbures de métaux lourds, nitrure de silicium, nitrures de métaux lourds, mélanges de charbon actif et de graphite, cokes, brais de houille ou de pétrole, métaux et alliages métalliques, notamment acier inoxydable.

7. Procédé selon la revendication 1, **caractérisé en ce que** le catalyseur consiste essentiellement en carbone et en particulier en charbon actif.

8. Procédé selon l'une des revendications 1 à 7, **caractérisé en ce que** le potentiel cathodique auquel est maintenu le catalyseur est compris entre 0,0 volt et -1,0 volt par rapport à l'électrode normale à hydrogène.

9. Procédé selon l'une des revendications 1 à 8, **caractérisé en ce que** le potentiel anodique, auquel est maintenue la solution aqueuse de composant anolytique dans le compartiment anodique, est compris entre 0,4 volt et 2 volts par rapport à l'électrode normale à hydrogène.

10. Procédé selon l'une des revendications 1 à 9, **caractérisé en ce que** la concentration en composant anolytique de la solution aqueuse de composant anolytique est comprise entre 0,05 mole et 2 moles par litre.

11. Procédé selon l'une des revendications 1 à 10, **caractérisé en ce que** la solution aqueuse de composant anolytique circule en circuit fermé depuis le compartiment anodique de la cellule électrolytique, en passant par une zone de dégazage, dans laquelle elle est débarrassée de l'oxygène qu'elle a dissous lors de la décomposition dans le compartiment anodique, pour revenir audit compartiment anodique.

12. Procédé selon la revendication 11, **caractérisé en ce que** la concentration en composant anolytique est maintenue constante dans le compartiment anodique, par addition d'une quantité d'appoint de composant anolytique à la solution dégazée recyclée au compartiment anodique.

13. Procédé selon l'une des revendications 1 à 12, **caractérisé en ce que** le composant anolytique est choisi parmi l'hydroxyde de sodium, l'hydroxyde de potassium, l'acide perchlorique, l'acide orthophosphorique et les sels de sodium ou de potassium desdits acides.

14. Procédé selon l'une des revendications 1 à 13, **caractérisé en ce que** la paroi perméable aux cations est une paroi du type séparateur mécanique comme une paroi céramique ou encore une paroi du type membrane polymère échangeuse de cations.

15. Procédé selon l'une des revendications 1 à 14, **caractérisé en ce que** le traitement de l'eau dans la cellule électrolytique est mis en oeuvre à des températures comprises entre 0°C et 50°C et plus particulièrement entre 4°C et 30°C.

**16.** Procédé selon l'une des revendications 1 à 15, **caractérisé en ce que** la différence de potentiel ou tension établie entre la cathode et l'anode de la cellule électrolytique a une valeur constante ou bien une valeur variant en fonction du temps.

**17.** Procédé selon l'une des revendications 1 à 16, **caractérisé en ce que** la différence de potentiel ou tension établie entre la cathode et l'anode de la cellule électrolytique varie, en continu ou discontinu, de manière cyclique en fonction du temps.

**Patentansprüche**

**1.** Elektrokatalytisches Verfahren zur Sauerstoffentfernung aus Wasser verschiedener Quellen, insbesondere Meerwasser, bei welchem man in einem zu behandelnden Wasserstrom ein elektrisches Feld erzeugt und den dem elektrischen Feld ausgesetzten Wasserstrom in Berührung mit einem elektrisch leitenden Sauerstoff-Reduktionskatalysator bringt, wobei man die Erzeugung des elektrischen Feldes in dem Wasserstrom und das In-Kontaktbringen des der Wirkung des elektrischen Feldes ausgesetzten Wasserstroms mit dem Katalysator gleichzeitig innerhalb desselben Reaktionsraums vornimmt, indem man den zu behandelnden Wasserstrom kontinuierlich durch ein Katalysatorbett in dem Kathodenbereich einer elektrolytischen Zelle leitet, die einen Kathodenbereich und einen Anodenbereich enthält, von denen ersterer mit mindestens einer als Kathode fungierenden Elektrode und letzterer mit mindestens einer als Anode fungierenden Elektrode ausgestattet ist, getrennt durch eine für Kationen durchlässige Wand, und indem man eine elektrische Spannung zwischen der Kathode und der Anode der elektrolytischen Zelle anlegt, um innerhalb des Kathodenbereichs den in dem behandelten Wasserstrom gelösten Sauerstoff zu verbrauchen und um teilweise eine wässerige Flüssigkeit zu zersetzen, die in dem Anodenbereich enthalten ist, wobei das Verfahren **dadurch gekennzeichnet ist, daß** die durchlässige Wand, die den Anodenbereich von dem Kathodenbereich trennt, ausschließlich für Kationen durchlässig ist, daß man in den Anodenbereich der elektrolytischen Zelle kontinuierlich eine leitende wässerige Lösung aus einer anolytischen Komponente leitet, die aus mindestens einer Zusammensetzung besteht, die ausgewählt ist aus Alkalimetall-Hydroxiden, Perchlorsäure, Borsäure, Phosphorsäure, Ameisensäure, Essigsäure, Trichloressigsäure sowie den Alkalimetall-salzen oder Alkalierdmetall-Salzen der genannten Säuren, wobei die wässerige Lösung eine Konzentration des anolytischen Bestandteils zwischen 0,01 Mol und 5 Mol pro Liter aufweist, und man die elektrische Spannung zwischen die Kathode und die Anode der elektrolytischen Zelle legt, wobei man das örtliche Elektrodenpotential des Kathodenbereichs, in welchem der in dem behandelten Wasserstrom gelöste Sauerstoff verbraucht wird, bezogen auf die Normal-Wasserstoffelektrode zwischen +0,3 Volt und -2 Volt hält, wobei das Potential des Anodenbereichs bezüglich der Normal-Wasserstoffelektrode auf Werten oberhalb von 0,4 Volt gehalten wird, so daß sich eine solche Menge der wässerigen Lösung der anolytischen Komponente zersetzen kann, daß in den Kathodenbereich eine solche Menge Kationen gelangen kann, bei der die elektrische Neutralität des den Kathodenbereich verlassenden Wasserstroms garantiert ist.

**2.** Verfahren nach Anspruch 1, **dadurch gekennzeichnet, daß** der Katalysator aus einer aktiven Phase besteht, die zumindest ein Metall enthält, und die auf einen elektrisch leitenden Träger niedergeschlagen ist.

**3.** Verfahren nach Anspruch 2, **dadurch gekennzeichnet, daß** die aktive Phase des Katalysators auf mindestens einem Metall basiert, ausgewählt aus Platin, Palladium, Rhodium, Iridium und Eisen.

**4.** Verfahren nach Anspruch 2 oder 3, **dadurch gekennzeichnet, daß** die gewichtsanalytische Menge des Metalls oder der Metalle in dem Katalysator 0,01 bis 5 Gew.-% des Katalysators ausmacht.

**5.** Verfahren nach Anspruch 4, **dadurch gekennzeichnet, daß** die gewichtsanalytische Menge des Metalls oder der Metalle in dem Katalysator 0,05 bis 5, insbesondere 0,1 bis 2 Gew.-% des Katalysators ausmacht.

**6.** Verfahren nach einem der Ansprüche 2 bis 5, **dadurch gekennzeichnet, daß** der leitende Träger des Katalysators aus einem Material besteht, das ausgewählt ist aus Aktivkohle, Graphit, Siliziumcarbid, Schwermetall-Carbiden, Silizium-Nitrid, Schwermetall-Nitriden, Gemischen aus Aktivkohle und Graphit, Koks, Teer- oder Petrolpech, Metallen und Metallegierungen, insbesondere rostfreiem Stahl.

**7.** Verfahren nach Anspruch 1, **dadurch gekennzeichnet, daß** der Katalysator im wesentlichen aus Kohlenstoff, insbesondere Aktivkohle besteht.

**EP 0 894 077 B1**

8. Verfahren nach einem der Ansprüche 1 bis 7, **dadurch gekennzeichnet, daß** das Kathodenpotential, auf dem der Katalysator gehalten wird, zwischen 0,0 Volt und -1,0 Volt bezüglich der Normal-Wasserstoffelektrode liegt.

9. Verfahren nach einem der Ansprüche 1 bis 8, **dadurch gekennzeichnet, daß** das Anodenpotential auf dem die wässerige Lösung der anolytischen Komponente in dem Anodenbereich gehalten wird, zwischen 0,4 Volt und 2 Volt liegt, bezogen auf die Normal-Wasserstoffelektrode.

10. Verfahren nach einem der Ansprüche 1 bis 9, **dadurch gekennzeichnet, daß** die Konzentration der anolytischen Komponente der wässerigen Lösung der anolytischen Komponente zwischen 0,05 Mol und 2 Mol pro Liter liegt.

11. Verfahren nach einem der Ansprüche 1 bis 10, **dadurch gekennzeichnet, daß** die wässerige Lösung der anolytischen Komponente in einem geschlossenem Kreis von dem Anodenbereich der elektrolytischen Zelle ausgehend durch eine Entgasungszone, in der sie von Sauerstoff befreit wird, der sich im Zuge der Zersetzung in dem Anodenbereich gebildet hatte, zurück zu dem Anodenbereich umläuft.

12. Verfahren nach Anspruch 11, **dadurch gekennzeichnet, daß** die Konzentration der anolytischen Komponente in dem Anodenbereich dadurch konstant gehalten wird, daß eine Zusatzmenge der anolytischen Komponente der in den Anodenbereich zurückgeführten entgasten Lösung zugegeben wird.

13. Verfahren nach einem der Ansprüche 1 bis 12, **dadurch gekennzeichnet, daß** die anolytische Komponente ausgewählt ist aus Natriumhydroxid, Kaliumhydroxid, Perchlorsäure, Orthophosphorsäure und den Natrium- oder Kaliumsalzen dieser Säuren.

14. Verfahren nach einem der Ansprüche 1 bis 13, **dadurch gekennzeichnet, daß** die für Kationen durchlässige Wand eine Wand vom mechanischen Separatortyp, beispielsweise eine Keramikwand, oder eine Wand in Form einer Kationenaustausch-Polymermembran ist.

15. Verfahren nach einem der Ansprüche 1 bis 14, **dadurch gekennzeichnet, daß** die Behandlung des Wassers in der elektrolytischen Zelle bei Temperaturen zwischen 0°C und 50°C insbesondere zwischen 4°C und 30°C abläuft.

16. Verfahren nach einem der Ansprüche 1 bis 15, **dadurch gekennzeichnet, daß** die Potentialdifferenz oder Spannung zwischen der Kathode und der Anode der elektrolytischen Zelle auf einem konstanten Wert oder auf einem als Funktion der Zeit veränderlichen Wert gehalten wird.

17. Verfahren nach einem der Ansprüche 1 bis 16, **dadurch gekennzeichnet, daß** die Potentialdifferenz oder die Spannung zwischen der Kathode und der Anode der elektrolytischen Zelle in Abhängigkeit der Zeit zyklisch kontinuierlich oder diskontinuierlich schwankt.

**Claims**

1. Electrocatalytic process for the deoxygenation of water from various sources and very particularly sea water, in which an electric field is generated in a stream of the water to be treated and the said stream of water, subjected to the action of the electric field, is brought into contact with a catalyst for the reduction of oxygen, carrying out the generation of the electric field in the stream of water and the operation of bringing the stream of water, subjected to the action of the electric field, into contact with the catalyst simultaneously in the same reaction volume by passing the stream of water to be treated continuously through a bed of the catalyst placed in the cathode compartment of an electrolytic cell which comprises a cathode compartment and an anode compartment which are provided, in the case of the former, with at least one electrode operating as a cathode and, in the case of the latter, with at least one electrode operating as an anode and which are separated by a wall permeable to cations, and is setting up a voltage between the cathode and the anode of the electrolytic cell in order to consume, in this compartment, the oxygen dissolved in the stream of water being treated, and for partially decomposing an aqueous liquid contained in the anode compartment, said process being **characterised in that** the permeable wall separating the anode compartment from the cathode compartment is only permeable to cations, and **in that** a conductive aqueous solution of an anolytic component composed of at least one compound chosen from alkali metal hydroxides, perchloric, boric, phosphoric, formic, acetic, trichloracetic acids and alkali metal or alkaline earth metal salts of said acids is passed continuously into the anode compartment of the electrolytic cell, the said aqueous solution having a concentration of anolytic component of between 0.01 mol and 5 mol per litre and an electric potential is established between the cathode and the anode of the electrolytic cell by maintaining the local electrode potential of the cathode compartment, in which the oxygen dissolved in the stream of water for treatment is consumed, at values, with respect to the standard hydrogen electrode, of between +0.3 volt and -2 volts, and under conditions such that the potential of the anode compartment takes values, with respect to the standard hydrogen electrode, greater than 0.4 volt, in order to form an amount of decomposed aqueous anolytic component solution appropriate for allowing the passage, into the cathode compartment, of the required amount of cations for ensuring the electrical neutrality, of the treated stream of water exiting from the cathode compartment.

2. Process according to Claim 1, **characterized in that** the catalyst comprises an active phase which comprises at least one metal and which is deposited on an electrically conducting support.

3. Process according to Claim 2, **characterized in that** the active phase of the catalyst is based on at least one metal chosen from platinum, palladium, rhodium, iridium and iron.

4. Process according to Claim 2 or 3, **characterized in that** the amount by weight of the metal or of the metals in the catalyst represents 0.01% to 5% of the weight of the catalyst.

5. Process according to Claim 4, **characterized in that** the amount by weight of the metal or of the metals in the catalyst represents 0.05% to 5% and more especially 0.1% to 2% of the weight of the catalyst.

6. Process according to one of Claims 2 to 5, **characterized in that** the conductive support of the catalyst is made of a material chosen from active charcoal, graphite, silicon carbide, heavy metal carbides, silicon nitride, heavy metal nitrides, mixtures of active charcoal and of graphite, cokes, coal or petroleum pitches, or metals and metal alloys, in particular stainless steel.

7. Process according to Claim 1, **characterized in that** the catalyst is composed essentially of carbon and in particular of active charcoal.

8. Process according to one of Claims 1 to 7, **characterized in that** the cathode potential at which the catalyst is maintained is between 0.0 volt and -1.0 volt with respect to the standard hydrogen electrode.

9. Process according to one of Claims 1 to 8, **characterized in that** the anode potential at which the aqueous solution of anolytic component is maintained in the anode compartment is between 0.4 volt and 2 volts with respect to the standard hydrogen electrode.

10. Process according to one of Claims 1 to 9, **characterized in that** the concentration of anolytic component in the aqueous solution of anolytic component is between 0.05 mol and 2 mol per litre.

11. Process according to one of Claims 1 to 10, **characterized in that** the aqueous solution of anolytic component moves in a closed circuit from the anode compartment of the electrolytic cell, passing through a degassing region in which it is freed from the oxygen which it dissolved during the decomposition in the anode compartment, in order to return to the said anode compartment.

12. Process according to Claim 11, **characterized in that** the concentration of anolytic component is kept constant in the anode compartment by addition of a supplementary amount of anolytic component to the degassed solution recycled to the anode compartment.

13. Process according to one of Claims 1 to 12, **characterized in that** the anolytic component is chosen from sodium hydroxide, potassium hydroxide, perchloric acid, orthophosphoric acid and the sodium or potassium salts of the said acids.

14. Process according to one of Claims 1 to 13, **characterized in that** the cation-permeable wall is a wall of the mechanical separator type, such as a ceramic wall, or alternatively a wall of the cation-exchange polymer membrane type.

15. Process according to one of Claims 1 to 14, **characterized in that** the treatment of the water in the electrolytic cell is carried out at temperatures of between 0°C and 50°C and more particularly between 4°C and 30°C.

16. Process according to one of Claims 1 to 15, **characterized in that** the difference in potential or voltage established between the cathode and the anode of the electrolytic cell has a constant value or else a value which varies as a function of time.

17. Process according to one of Claims 1 to 16, **characterized in that** the difference in potential or voltage established between the cathode and the anode of the electrolytic cell varies cyclically, continuously or non-continuously, as a function of time.

FIG.1

FIG.2

FIG.3

EP 0 894 077 B1